Europäisches Patentamt

(19) European Patent Office

Office européen des brevets

(11) Publication number: **0 106 703**
**B1**

(12) # EUROPEAN PATENT SPECIFICATION

(45) Date of publication of patent specification: **09.09.87**

(51) Int. Cl.⁴: **B 62 B 3/00**

(21) Application number: **83306331.6**

(22) Date of filing: **18.10.83**

(54) **A roller container.**

(30) Priority: **18.10.82 DK 4609/82**

(43) Date of publication of application:
**25.04.84 Bulletin 84/17**

(45) Publication of the grant of the patent:
**09.09.87 Bulletin 87/37**

(84) Designated Contracting States:
**AT BE CH DE FR GB IT LI NL SE**

(56) References cited:
**WO-A-81/01820**
**FR-A-2 142 506**
**FR-A-2 180 397**
**FR-A-2 365 489**

(73) Proprietor: **VARIANTSYSTEMET A/S**
**Fynsvej 60**
**DK-5500 Middelfart (DK)**

(72) Inventor: **Nesting, Erik Markvard Grubbe**
**Fuglebakken 7**
**DK-5500 Middelfart (DK)**

(74) Representative: **Smith, Martin Stanley et al**
**Stevens, Hewlett & Perkins 5, Quality Court**
**Chancery Lane**
**London WC2A 1HZ (GB)**

Courier Press, Leamington Spa, England.

## Description

The invention concerns a roller container of the type comprising a base plate which is foldably or tiltably journalled between a pair of opposite side members, which are mutually pivotable between a storage position in which the container with folded-up base plate and diverging side members can receive an adjacent container of the same type, and a position of use in which the base plate is substantially horizontal and prevents pivoting of the side members (WO—A—81/01820).

Such containers are greatly used for the transport of food products, and when the containers are empty they are to be stored and should therefore take up as little space as possible; consequently, it is expedient that the base plate may be folded up and the side members may be pivoted a little apart from each other so that the whole row of containers may be pushed into each other just like shopping carts. It is moreover known that the base plate is provided with a locking mechanism ensuring that the base plate falls down when the locking mechanism is released. The base plate will then fall down and hit some stops defining its position of use with a hard blow. This causes much noise and a great load on both the base plate and its hinges so that the dimensions of the latter parts must be very sturdy to withstand this impact.

The object of the invention is to provide a roller container of the present type and with means causing soft brakening of the drop of the base plate toward the horizontal position, resulting in a lighter and cheaper construction of the roller container.

This object is achieved in that at least one side member has a first, inwardly extending projection extending transversely to the plane of the side member and having an edge disposed below the base plate to cooperate with an edge on a second projection extending from the underside of the base plate, said projections being positioned relatively closely to the pivot axis of the pivoting movement of both the base plate and the side members so that the said edges cooperate to transform a moment of motion of the base plate to a moment for pivoting the side member toward its position of use when the base plate forms an acute angle with the horizontal plane. Then the projections on the underside of the base plate hit the projections on the side members when the base plate approaches the horizontal position so that the moment of motion of the base plate is transformed to a movement of the side members from the storage position towards the position of use, as the projections on the base plate act on the projections of the side member in such a direction that the side member is pulled toward the position of use. Thus, the projections of the side members act as resilient engagements for the projections of the base plate, causing the movement of the base plate to be gradually slowed down. This effect can thus be be achieved by very simple means, but of course there are limits to how the said projections may be positioned in relation to each other in order for them to operate as desired in practice, i.e. the edge of the base plate projections in the preferred embodiment hit a cooperating edge of the side member projection facing away from the base plate hinge when the projections cooperate with each other. The operation is ensured by locating the cooperating projections relatively closely to the hinges of the base plate as well as the side member.

When the said edge on the projection of the base plate forms an obtuse angle with the base plate, as measured in a direction away from the projection, the projections cooperate over a greater travel of the base plate, implying that the projections of the side members may be extended or spaced more from the hinges which results in an increase in the torque which urges the side members in a direction toward their position of use.

According to the invention, the base plate has a projection opposite each wheel bracket and so positioned and shaped that the end of the projection which faces away from the base plate in the position of use transmits vertical loads on the base plate to the wheel brackets so that the load on the base plate is transmitted directly to the wheel brackets in the position of use, permitting further reduction in the strength requirements of the base plate hinges.

According to the invention, the projections of the side members extend over the wheel brackets in space relationship therewith, and the projections have downwardly extending supports to support the projections on the wheel brackets. This ensures that these projections cannot be bent downwardly if, as an exception, the base plate projections hit the top of the side member projections. Moreover, the cooperation between the projections of the base plate and the side members result in a downwardly directed component of force of the projections of the side members, and this load, too, can be supported by the wheel brackets through the said downwardly directed supports.

The invention will be explained more fully by the following description of an embodiment with reference to the drawing, in which.

Fig. 1 is a perspective view of an embodiment of the roller container of the invention.

Figs. 2A and 2B are schematic views of some details in the preferred embodiment, while.

Fig. 3 is a schematic view of another embodiment of the invention.

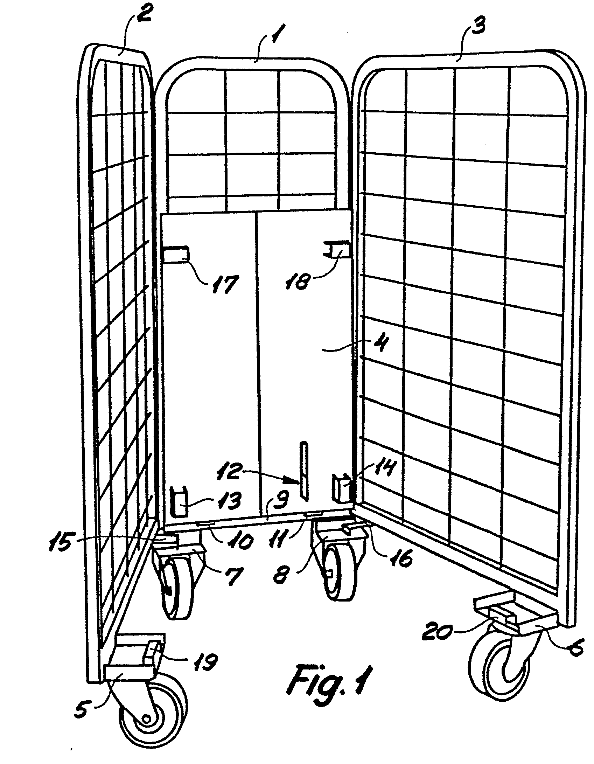

The roller container shown in Fig. 1 comprises a rear member 1, a pair of side members 2, 3 and a base plate 4. Usually the container also comprises a foldable front member, preferably by way of one or two gates (not shown). The side members 2, 3 are hinged to the rear member 1 so as to be pivotable between the position shown in the figure, called storage position, and a position in which the side members are mutually parallel, called the position of use. The lower edge of each of the side members has attached to it brackets 5 and 6 for driving wheels, which are preferably rotatable about a vertical axis. The two other driving wheels are carried by brackets 7 and 8 which are interconnected by means of a cross member 9 (see Fig. 2A where the rear members and the side members are removed). The base plate 4 is pivotally connected to the cross member by hinges 10 and 11; moreover there is provided a drop bolt 12 known per se which is arranged to retain the base plate 4 in a vertical position in cooperation with the rear member 1, and which can be released so that the base plate falls down to the horizontal position.

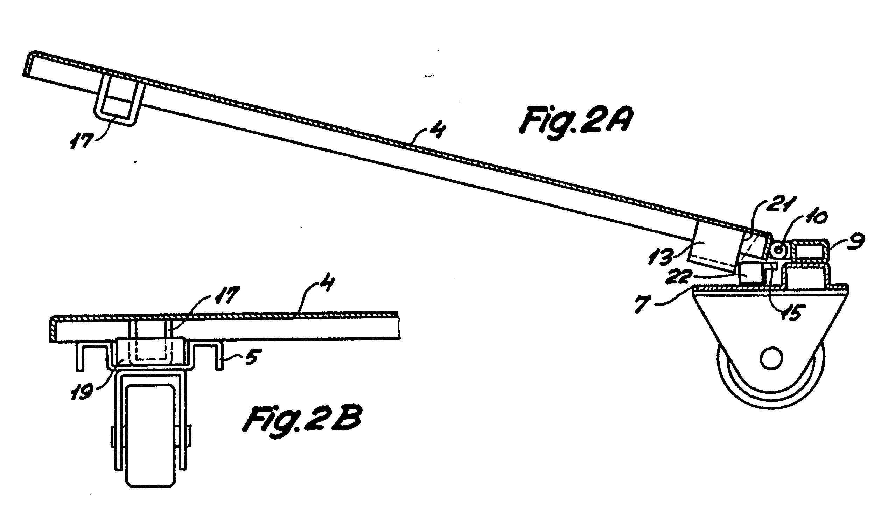

The means of the invention will first be discussed with reference to Fig. 1, and the operation will then be described more fully with reference to Figs. 2A and B, which schematically show the parts of Fig. 1 which are necessary to understand the invention.

The base plate 4 has a pair of projections 13 and 14 in the vicinity of the hinges, and these projections are arranged to cooperate with inwardly extending projections 15 and 16, respectively, which are secured to the side members 2 and 3. The base plate has moreover a pair of additional projections 17, 18 which are arranged to cooperate with the wheel brackets 5, 6, each of which having a stop block 19, 20 as known in the art. The stop blocks are so mounted as to prevent, in cooperation with the projections 17 and 18, the side members 2, 3 from being pivoted away from their mutually parallel position when the base plate 4 is horizontal. In other words, the base plate has to be lifted sufficiently for the projections 17 and 18 to clear the stop blocks 19 and 20 in order that the side members may be pivoted to the side.

When the drop bolt 12 is released the base plate 4 drops from the vertical to the horizontal position, and when the base plate is in the inclined position shown in Fig. 2A, and edge 21 of the projection 13 hits the inwardly extending projection 15 (the same effect occurs between the projections 14 and 16). The moment of motion which the base plate 4 has obtained around its hinges by the drop from the vertical position is then transformed to a pressure on the projection 15 (to the right in Fig. 2A), which causes the side member 2 to pivot a distance toward the position of use. Thus, the projection 15 yields to the action of the projection 13 causing limited loading of the hinges 10, 11. In addition to being urged to the right in Fig. 2A, the projection 15 is also urged slightly downwardly, and this load is received by a support in form of a downwardly bent end flange 22 which engages the wheel bracket 7. It will be appreciated that if the side member should exceptionally be pivoted too far away from the position of use, the projection 13 may hit the top side of the inwardly extending projection 15, and in that case the end flange 22 ensures that the projection 15 will not be bent. However, the side members are provided with means known per se to define their extreme positions so that the latter situation can only occur in case of overloading.

Fig. 2B shows moreover how the base plate 4 engages the wheel bracket 5 in the position of use; it appears that the stop block 19, as previously explained, engages the internal end of the projection 17 so that the side member cannot be pivoted away from the position of use before the base plate 4 has been lifted so much that the projection 17 clears the stop block 19. When the driving wheels are in the position shown in the drawing, the torque on the side members 2, 3, as caused by the drop of the base plate, may be sufficient for the side members to be pivoted right into their position of use, but if the driving wheels are pivoted through 90°, the side members cannot normally be moved right into their position of use. It is therefore important that the projections 17, 18 have a relatively great extent measured in parallel with the hinge side of the base plate so that just slight pivoting of the side members away from the storage position is sufficient for the projections 17, 18 to engage the stop blocks 19, 20, so that the mechanism around the hinge side and the base plate is not overloaded if a user steps onto the base plate.

It is evident that there are certain limits to the mutual position of the projections 13, 15 (and 14, 16), which is due to the length of the projections 15, 16, and the angle between the side members in the storage position. The projections 13, 15 may cooperate, however, over a great travel of the base plate if the edge 21 forms an obtuse angle with the base plate 4, as indicated by the broken line in Fig. 2A. With respect to the prior art the means described involve a considerable reduction in the hinge load and since the projections 13 and 14 are dimensioned to engage the respective wheel brackets 7 and 8 in the position of use, the hinge is not loaded by the goods in the container either. Thus a construction which is reliable in operation and protected against overloading is provided by very simple means.

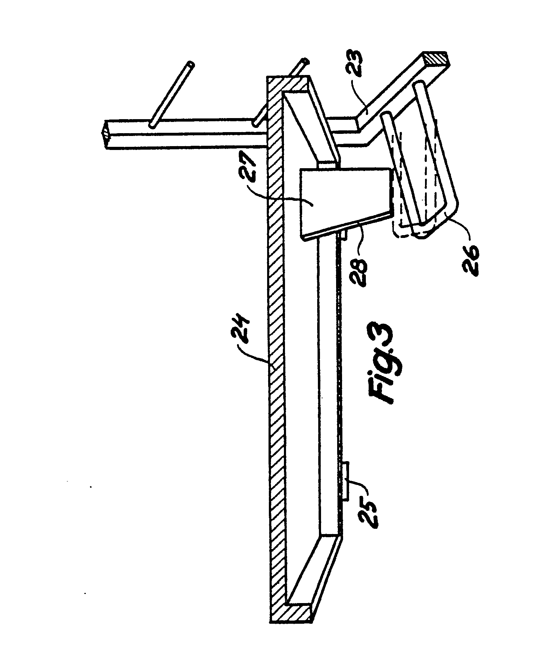

The preferred embodiment has been described in the foregoing, but, within the scope of the invention, the cooperating projections may also be positioned in another manner to provide the effect of the invention. Such other positioning appears from Fig. 3, which schematically shows the cooperating parts which are sufficient to understand the operation regard being had to the foregoing description.

Fig. 3 shows a base plate 24 in a position corresponding to Fig. 2A, where the projections do not yet cooperate. The projections in Fig. 3 comprise an inwardly extending projection 26 attached to the side member 23 as well as a projection 27 protruding from the underside of the base plate 23 (it will be appreciated that similar projections may be provided to the left in Fig. 3).

As shown in Fig. 3, the projection 26 may be U-shaped and is arranged to receive the projection 27 when the base plate has been pivoted a little further downwardly around its hinges 25. The free end of the projection 27 can just extend into the U-shaped strap so that the edge 28 of the projection 27 engages the bottom of the U. When the base plate 24 is moved downwardly towards its horizontal position, the edge 28, due to its inclination, will affect the strap 26 so that the strap is moved to the position shown in broken lines, pulling the side member 23 toward the position of use, previously mentioned, which provided the effects described in the foregoing.

It is evident that the embodiment explained in connection with Fig. 3 can additionally be combined with the means previously described to support the side member projections and to support the base plate in the position of use, and it will also be appreciated that the projection may be formed so as to cooperate in accordance with the combination of the engagements explained in connection with both of the described embodiments.

**Claims:**

1. A roller container of the type comprising a base plate (4) which is foldably or tiltably journalled between a pair of opposite side embers (23), which are mutually pivotable between a storage position in which the container with folded-up base plate and diverging side members can receive an adjacent container of the same type, and a position of use in which the base plate is substantially horizontal and prevents pivoting of the side members, characterized in that at least one side member (2, 3) has a first, inwardly extending projection (15, 16) extending transversely to the plane of the side member and having an edge disposed below the base plate to cooperate with an edge (21) on a second projection (13. 14) extending from the underside of the base plate (4), said projections being positioned relatively closely to the pivot axis of the pivoting movement of both the base plate (4) and the side members (2, 3) so that the said edges cooperate to transform a moment of motion of the base plate to a moment for pivoting the side member toward its position of use when the base plate (4) forms an acute angle with the horizontal plane.

2. A roller container according to claim 1, characterized in that said edge (21) on the projection (13, 14) of the base plate forms an obtuse angle with the base plate, as measured in a direction away from the projection (13, 14).

3. A roller container according to claim 1 or 2, in which the base plate is hinged to a cross member connecting a pair of wheel brackets, characterized in that the base plate (4) has a projection (13 and 14) opposite each wheel bracket (7, 8) and so positioned and shaped that the end of the projection which faces away from the base plate in the position of use transmits vertical loads on the base plate (4) to the wheel brackets (7, 8).

4. A roller container according to claim 3, characterized in that the projections (15, 16) of the side members extend over the wheel brackets (7, 8) in spaced relationship therewith, and that the projections (15, 16) have downwardly extending supports (22) to support the projections (15, 16) on the wheel brackets (7, 8).

**Patentansprüche**

1. Rollencontainer von der Bauart mit einer Basisplatte (4), die klappbar oder zusammenlegbar zwischen einem Paar von gegenüberliegenden Seitenteilen (2, 3) angelenkt ist, die gegenseitig zwischen einer Lagerstellung, in der der Behälter mit hochgeklappter Basisplatte und divergierenden Seitenteilen einen benachbarten Container vom gleichen Typ aufnehmen kann, und einer Betriebsstellung schwenkbar sind, in der die Basisplatte im wesentlichen horizontal ist und eine Schwenkbewegung der Seitenteile verhindert, dadurch gekennzeichnet, daß mindestens ein Seitenteil (2, 3) einen ersten, nach innen gerichteten Vorsprung (15, 16) aufweist, der sich quer zur Ebene des Seitenteiles erstreckt und der eine Kante aufweist, die unter der Basisplatte angeordnet ist, um mit einer Kante (21) an einem zweiten Vorsprung (13, 14) zusammenzuwirken, der sich von der Unterseite der Basisplatte (4) erstreckt, wobei der Vorsprünge relativ dicht bei der Drehachse der Schwenkbewegung sowohl der Basisplatte (4) als auch der Seitenteile (2, 3) angeordnet sind, so daß die Kanten zusammenwirken, um ein Bewegungsmoment der Basisplatte in ein Moment umzusetzen, um die Seitenteile in ihre Betriebsstellung zu schwenken, wenn die Basisplatte (4) einen spitzen Winkel mit der horizontalen Ebene bildet.

2. Rollencontainer nach Anspruch 1, dadurch gekennzeichnet, daß die Kante (21) an dem Vorsprung (13, 14) der Basisplatte einen stumpfen Winkel mit der Basisplatte bildet, gemessen in einer von dem Vorsprung (13, 14) weg weisenden Richtung.

3. Rollencontainer nach Anspruch 1 oder 2, bei dem die Basisplatte an einem Querträger angelenkt ist, der ein Paar von Radhalterungen verbindet, dadurch gekennzeichnet, daß die Basisplatte (4) einen Vorsprung (13 und 14) aufweist, der der jeweiligen Radhalterung (7, 8) gegenüberliegt und so positioniert und geformt ist, daß das Ende des Vorsprunges, welches von der Basisplatte weg gerichtet ist, in der Betriebsstellung vertikale Belastungen auf die Basisplatte (4) auf die Radhalterungen (7, 8) überträgt.

4. Rollencontainer nach Anspruch 3, dadurch gekennzeichnet, daß die Vorsprünge (15, 16) der Seitenteile sich über den Radhalterungen (7, 8) in beabstandeter Anordnung mit ihnen erstrecken, und daß die Vorsprünge (15, 16) nach unten verlaufende Träger (22) aufweisen, um die Vorsprünge (15, 16) auf den Radhalterungen (7, 8) abzustützen.

**Revendications**

1. Conteneur à roulettes, du type comprenant une plaque de base (14) qui est montée à rotation, de façon à pouvoir être repliée ou basculée, entre deux éléments latéraux opposés (2, 3), qui peuvent être mutuellement, déplacés par pivotement entre une position de stockage dans laquelle le conteneur, avec la plaque de base repliée vers le haut et ses éléments latéraux divergents, peut recevoir un conteneur adjacent de même type, et une position d'utilisation dans laquelle la plaque de base est sensiblement horizontale et interdit tout pivotement des éléments latéraux, caractérisé en ce que l'un au moins des éléments latéraux (2, 3) comporte une première saillie (15, 16) dirigée vers l'intérieur tout en s'étendant transversalement au plan de l'élément latéral et présentant un bord disposé au-dessous de la plaque de base pour coopérer avec un board (21) d'une seconde saillie (13, 14) s'étendant depuis la face inférieure de la plaque de base (4), ladite saillie étant positionnée relativement près de l'axe de pivotement du mouvement pivotant à la fois de la plaque de base (4) et des éléments latéraux (2, 3), pour que lesdits bords coopèrent afin de transformer un couple produisant le mouvement de la plaque de base en un couple produisant le pivotement de l'élément latéral vers sa position d'utilisation, quand la plaque de base (4) forme un angle aigu avec le plan horizontal.

2. Conteneur à roulettes selon la revendication 1, caractérisé en ce que ledit bord (21), présent sur la saillie (13, 14) de la plaque de base, forme, avec la plaque de base un angle obtus, mesuré dans une direction l'éloignant de la saillie (13, 14).

3. Conteneur à roulettes selon la revendication 1 ou 2, dans lequel la plaque de base est articulée sur une traverse reliant entre elles deux chapes de roues, caractérisé en ce que la plaque de base (4) présente une saillie (13 et 14) placée en regard de chaque chape de roue (7, 8) et positionnée et profilée de telle façon que l'extrémité de la saillie, qui est tournée à l'opposé de la plaque de base dans la position d'utilisation, transmette aux chapes de roues (7, 8) les efforts s'exerçant dans la direction verticale sur la plaque de base (4).

4. Conteneur à roulettes selon la revendication 3, caractérisé en ce que les saillies (15, 16) des éléments latéraux s'étendent au-dessus des chapes de roues (7, 8) en étant espacées par rapport à celles-ci, et en ce que les saillies (15, 16) ont des supports (22) s'étendant vers le bas pour supporter les saillies (15, 16) sur les chapes de roues (7, 8).

**Fig. 1**

Fig.2A

Fig.2B

7

17

4

13

22

21

10

9

15

17

4

19

5

2

Fig.3